Europäisches Patentamt

European Patent Office

Office européen des brevets

(19)

(11) Publication number: **0 029 711**
**B1**

## EUROPEAN PATENT SPECIFICATION

(12)

(45) Date of publication of patent specification: **23.11.83**

(51) Int. Cl.³: **F 16 H 3/08**

(21) Application number: **80304160.7**

(22) Date of filing: **20.11.80**

(54) **Rotary power transmission.**

(30) Priority: **26.11.79 GB 7940750**

(43) Date of publication of application:
**03.06.81 Bulletin 81/22**

(45) Publication of the grant of the patent:
**23.11.83 Bulletin 83/47**

(84) Designated Contracting States:
**DE FR GB IT**

(56) References cited:
**DE - A - 2 029 572**
**DE - B - 1 286 856**
**FR - A - 1 207 451**
**FR - A - 1 230 353**
**FR - A - 1 469 727**
**GB - A -   795 260**
**GB - A -   808 546**
**GB - A - 1 225 265**
**GB - A - 1 349 936**
**US - A - 3 991 634**

(73) Proprietor: **AUTOMOTIVE PRODUCTS PUBLIC LIMITED COMPANY**
**Tachbrook Road**
**Leamington Spa Warwickshire CV31 3ER (GB)**

(72) Inventor: **Webster, Henry George**
**The Old School House Barrowfield Lane**
**Kenilworth Warwickshire (GB)**
Inventor: **Bainbridge, Wilfred Nicholas**
**"Staddle Stones" Overthorpe**
**Nr. Banbury Oxfordshire (GB)**
Inventor: **Parsons, David**
**73 John O'Gaunt Road**
**Kenilworth Warwickshire (GB)**

Courier Press, Leamington Spa, England.

Rotary power transmission

This invention relates to a rotary power transmission of the dual clutch kind for a transverse engined, front wheel drive motor vehicle, by which is meant a transmission having gear trains, each being one of a set providing a series of increasing speed ratios, and two clutches independently operable and providing alternative drive paths through the gear trains between a common input and a common output, the gear trains of alternate speed ratios in the set being driven respectively through one and the other clutch.

The invention is particularly though not exclusively applicable to drive transmissions for motor vehicles.

Transmissions of the dual clutch kind are derived from conventional single clutch manual-change transmissions with which they can share many component parts.

Examples of transmissions of the dual clutch kind are shown in British Patent Specification Nos. 145,827 (Bramley-Moore), 585,716 (Kegresse), 795,260 (David Brown) and 1,225,267 (Bosch). To the best of our knowledge, none of these prior proposals has been commercially adopted.

For many years it has been customary for vehicle manufacturers to offer each vehicle model with the alternative of a manual-change or, where possible, a fully automatic transmission. As sales of vehicles fitted with automatic transmissions have risen it has become necessary for manufacturers to seek an automatic transmission for every new vehicle model.

Although most manufacturers use the same basic design of manual-change transmission, many different types of automatic transmissions are in use and most are complicated and carry a heavy cost disadvantage. Moreover each new type and model of automatic transmission requires an expensive test programme to ensure satisfactory strength and functioning, requires the manufacture and stocking of many new parts and may require the training of personnel to service the transmission.

Conventional automatic transmissions frequently take up more space than their manual-change transmission counterparts. The trend towards front engine-front wheel drive vehicles has meant that, in the smaller vehicle ranges, no automatic transmission option is offered simply because sufficient space to install the transmission is not available.

Transmissions of the dual clutch kind have not come into use despite having the advantage of simplicity and of component part interchangability with the equivalent manual-change transmissions.

Many of the previous proposals for transmissions of the dual clutch kind have the clutches arranged at the same side of the set of gear trains, a single driving member being provided for both clutches in most cases.

DE—C—965 585 proposes a rail car transmission having fluid couplings located on either side of a set of gear trains. The transmission operates in the same way as a transmission of the dual clutch kind by alternate drive through the fluid couplings. Such a transmission is not suitable for a motor vehicle because of the large space requirement of two torque converters and the slowness of any ratio change. Moreover torque converters would be prohibitively expensive for the transmission disclosed herein.

According to the present invention in a rotary power transmission of the dual clutch kind, whereby a spring engaged dry plate friction clutch engagable to provide a drive path through the gear train of at least one odd speed ratio is arranged at one side of the set of gear trains adjacent said common input and a fluid-pressure engaged wet friction clutch engagable to provide a drive path through the gear train of at least one even speed ratio is arranged at the other side of the set.

A major advantage of this arrangement is that a manual-change transmission from which a transmission of the dual clutch kind is adapted, can remain substantially unchanged and the spatial problems of installation are considerably reduced as compared with an arrangement of a dual clutch at one side of the set of gear trains. The external dimensions of a manual-change transmission can remain virtually unchanged except for the provision of an additional clutch which may be located co-axial with the transmission input shaft or with a transmission layshaft.

A subsidiary advantage of arranging the clutches on either side of the set of gear trains is that the design of control connections to each clutch is eased simply because the clutches are not adjacent.

Variations are possible in the selection of the type of clutch provided at one side or the other of the set of gear trains, it being possible to suit particular requirements by selecting, for example, a dry plate friction clutch for drive take-up from rest.

However, the additional clutch is preferably used only for speed ratio changes in the transmission and not for drive take-up from rest. As a result the required capacity of the additional clutch may be much reduced and the consequent benefit of small size together with the aforementioned capability of alternative location within the transmission ensures that space for the clutch can be found in existing installations.

One clutch may be a dry plate friction clutch and is advantageously the same as that specified for an equivalent manual-change transmission. Preferably this clutch is used for drive take-up from rest only for the gear grain of the lowest forward speed ratio.

The necessary ancillary controls for the transmission may be situated in the transmission casing or in any convenient space in the installation site.

The additional clutch may be a fluid-pressure engaged wet friction clutch. Such a clutch can operate in the transmission fluid and so does not require to be sealed from the main transmission casing.

Adoption of a transmission of the dual clutch kind according to the invention will enable a vehicle manufacturer to take advantage of a number of subsidiary advantages. Interchangability of parts with equivalent manual-change transmission will enable the manufacturer to achieve economies of scale, these economies being substantial for relatively expensive components such as gear wheels.

The additional cost of testing and proving a transmission of the dual clutch kind will be low as compared with the costs for a new design of conventional automatic transmission.

The manufacturer and vehicle dealer can reduce their spares inventory; servicing of the transmission should be within the capabilities of a skilled mechanic.

Finally, since it is anticipated that the cost of manufacture and service support of a transmission of the dual clutch kind provided by the invention will be lower than that of a conventional automatic transmission, the cost to the buyer of specifying an automatic transmission option should be much reduced.

Other features of the invention are included in the following description of two preferred embodiments shown, by way of example only, on the accompanying drawings in which:—

Fig. 1 illustrates a conventional two shaft manual-change transmission having gear trains in constant mesh;

Fig. 2 illustrates one embodiment of the invention as applied to the transmission of Fig. 1; and

Fig. 3 illustrates an alternative embodiment of the invention as applied to the transmission of Fig. 1.

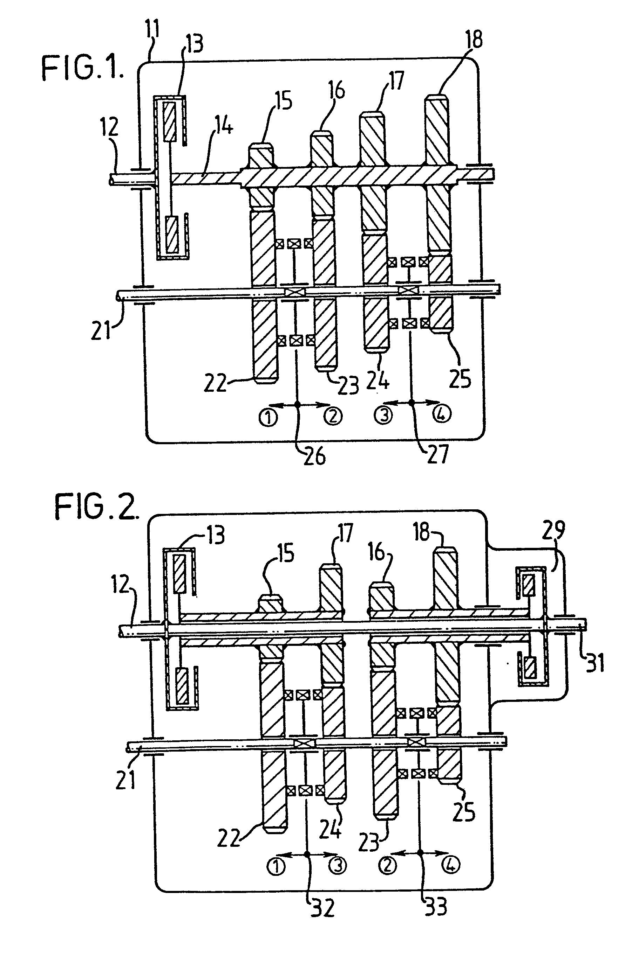

With reference to Fig. 1 there is shown a conventional four speed gear transmission 11 for interposition in a vehicle drive line between the engine and the driven wheels. The arrangement is particularly suitable for vehicles having transversely mounted engines with front wheel drive, the transmission output being on the same side of the set of gear trains as the input.

An input shaft 12 is connectable through a disengagable clutch 13 to a transmission main shaft 14. The main shaft 14 carries fast thereon gear wheels for rotation therewith, respectively for first speed ratio 15, second ratio 16, third ratio 17 and fourth ratio 18.

A countershaft 21 has journalled thereon gear wheels 22—25 for individual rotation, each respectively in mesh with one of the wheels 15—18 of the main shaft 14.

Synchroniser assemblies 26, 27 are movable axially by a transmission change speed lever to connect the countershaft 21 to any one of the gear wheels 22—25.

The countershaft 21 is the output shaft of the transmission and is connected to the differential gear of the vehicle drive.

Reverse speed ratio may be obtained by any known means, for example, the use of a separate gear train having a lay gear to reverse rotation of the drive. Such an arrangement may be found in many manual-change transmissions.

The operation of such a gear transmission is well known but for clarity a ratio change from second speed to third speed will be described.

Synchroniser assembly 26 is in the rightwards position, as viewed, to connect the main shaft 14 to the countershaft 21 through second speed gear train 16, 23. The clutch 13 is engaged and driving torque is transmitted from the input shaft 12 to the countershaft 21. The first, third and fourth speed gear trains are driven idly at engine speed by the main shaft 14.

To change speed ratio the clutch 13 is disengaged, so breaking the driving torque transmitted through the transmission. Synchroniser assembly 26 is moved to disconnect second speed gear wheel 23 from the countershaft and third speed gear wheel 24 is connected to the countershaft 21 by moving synchroniser assembly 27 leftwards, as viewed.

The ratio change is completed by re-engaging the clutch 13 to re-establish driving connection between the engine and the vehicle driven wheels. First, second and fourth speed gear trains are now driven idly by the main shaft.

Although the manual-change transmission has been described with the relatively rotatable gear wheels journalled on the countershaft 21, some or all of the gear trains could have the relatively rotatable gear wheels, under the control of the synchroniser assemblies, supported by the main shaft with the respective meshing gear wheels being fast for rotation with the countershaft. This arrangement would result in some or all of the non-driving gear trains being driven idly at road speed.

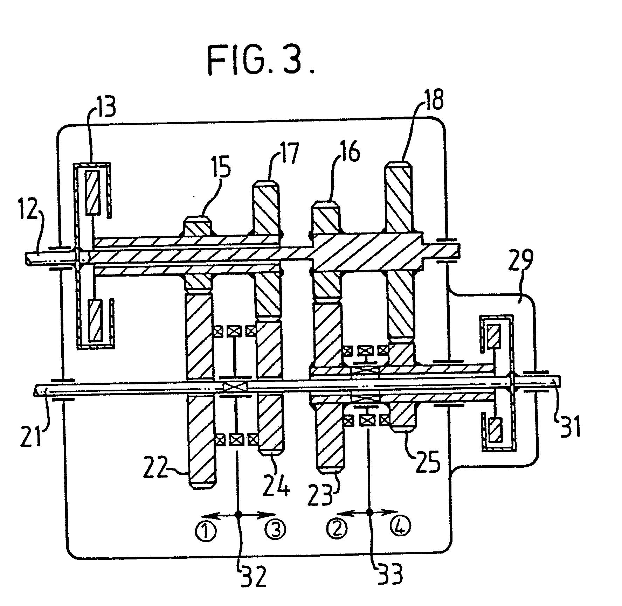

The transmission of Fig. 2 and 3 has the position of second and third speed gear trains inter-changed so as to place the "odd" ratios, first and third, and the "even" ratios, second and fourth, in adjacent pairs.

The transmission main shaft is tubular and divided into two parts so that the "even" gear trains and "odd" gear trains can be separately driven from the input shaft 12.

Referring to Fig. 2, the "odd" gear trains are driven through the clutch 13, and the "even" gear trains through an additional clutch 29 which is itself driven from the input shaft 12 by a shaft 31 co-axial with and extending through both parts of the tubular main shaft.

It is intended that automatic speed ratio selection would be effected using known automatic transmission control technology as described for example in 'Torque Converters or Transmissions' by P. M. Heldt and published by Chilton. The transmission would be provided with a selector lever having the usual DRIVE, NUETRAL, REVERSE and PARK positions.

Operation of the transmission is as follows:—

The vehicle engine is running, the selector lever is in NEUTRAL and both clutches 13 and 29 are disengaged.

The vehicle driver engages DRIVE and the transmission automatic control selects first speed by moving synchroniser assembly 32 to connect gear wheel 22 to the countershaft 21. As the driver accelerates the engine, the clutch 13 is automatically engaged and driving torque transmitted through gear wheels 15, 22, to the vehicle drive.

The transmission automatic control can now select second speed by moving synchroniser assembly 33 to connect gear wheel 23 to the countershaft 21. Consequently the second ratio drive train of gear wheels 23, 16 and the driven plate of clutch 29 are driven idly by countershaft 21, the drive member of clutch 29 being driven constantly at engine speed by the shaft 31.

The transmission automatic control initiates a ratio change from first speed to second speed in response to the values of the usual control parameters such as throttle opening and road speed.

The clutch 13 is disengaged as the clutch 29 is engaged and driving torque is progessively transferred from the first ratio gear train to the second ratio gear train so providing a "power on" ratio change. When the change is completed the first ratio drive train is driven idly by the countershaft 21.

Dependent on the value of the automatic control parameters the synchroniser assembly 32 will remain with first speed ratio selected or be moved to select third speed ratio by connecting gear wheel 24 to the countershaft 21. Alternatively synchroniser assembly 32 may shift to the neutral position until the automatic control indicates an imminent ratio change.

Thus the transmission automatic control is arranged to pre-select the next required speed ratio in sequence, the ratio change being automatically made at the appropriate moment by changing drive from one clutch to the other.

It is not intended that the additional clutch 29 should be used for drive take up from rest. As a result the required capacity is much reduced and the clutch can be of small size when compared with the main clutch 13.

With reference to Fig. 3 there is shown a modification of the dual clutch transmission where the additional clutch 29 is co-axial with the countershaft 21.

The operation of the transmission is as previously described for the embodiment of Fig. 2. Speed ratios are pre-selected by the automatic control in accordance with the usual control parameters and, at the appropriate moment, the automatic control effects a ratio change by disengaging the drive through one clutch as the drive through the other clutch is engaged.

Although the invention has been described with reference to a constant mesh gear arrangement, it is equally adaptable to other gear arrangements such as, for example, those utilising sliding gears or sliding dogs.

## Claims

1. A transmission for a transverse engined, front wheel drive motor vehicle and having gear trains (15, 22; 16, 23; 17, 24; 18, 25), each being one of a set providing a series of increasing speed ratios, and two clutches (13, 29) independently operable and providing alternative positive drive paths through the gear trains between a common input shaft (12) and a common output shaft (21), the gear trains of alternative speed ratios in the set being driven respectively through one and the other clutch, characterised thereby that a spring engaged dry plate friction clutch (13) engagable to provide a drive path through the gear train (15, 22; 17, 24) of at least one odd speed ratio is arranged at one side of the set of gear trains adjacent said common input shaft (12) and a fluid-pressure engaged wet friction clutch (29) engagable to provide a drive path through the gear train (16, 23; 18, 25) of at least one even speed ratio is arranged at the other side of the set.

2. A transmission according to Claim 1, characterised thereby that each gear wheel is a two wheel train, one wheel of each train being co-axial with the common input shaft (12) and the other wheel co-axial with the common output shaft (21) and journalled thereon.

3. A transmission according to Claim 1, characterised thereby that said wet friction clutch (29) is co-axial with the common output (21).

## Patentansprüche

1. Getriebe mit Sätzen von Zahnrädern (15, 22; 16, 23; 17, 24; 18, 25) für ein Motorfahrzeug mit Frontantrieb und quer stehender Brennkraftmaschine, bei dem jeder Satz einer Gruppe zur Bildung einer Reihe von Gängen mit ansteigender Gangzahl angehört und zwei unabhängig voneinander betätigbare Kupplungen (13, 29) vorgesehen sind, durch die über die Sätze von Zahnrädern alternative formschlüssige Antriebswege zwischen einer gemeinsamen Eingangswelle (12) und einer gemeinsamen Ausgangswelle (21) herstellbar und die Sätze von Zahnrädern alternativer Gänge in der Gruppe durch die eine und durch die andere Kupplung antreibbar sind, dadurch gekennzeichnet, daß eine durch eine Feder eingerückte Reibkupplung (13) mit trockener Kupplungsscheibe zur Herstellung eines Antriebsweges über den Satz von Zahnrädern (15, 22; 17, 24) wenigstens eines ungeradzahligen Ganges einrückbar und an einer Seite der Gruppe von Sätzen von Zahnrädern neben der gemeinsamen Eingangswelle (12) angeordnet ist und eine durch Druckmittel eingerückte Naß-Reibkupplung (29) zur Herstellung eines Antriebsweges über den Satz von Zahnrädern (16, 23; 18, 25) wenigstens eines geradzahligen Gangs einrückbar und an der anderen Seite der Gruppe angeordnet ist.

2. Getriebe nach Anspruch 1, dadurch gekennzeichnet, daß jedes Zahnrad einen Satz von zwei Zahnrädern bildet, deren eines koaxial zu der gemeinsamen Eingangswelle (12) und deren anderes koaxial zu der gemeinsamen Ausgangswelle (21) angeordnet und daran gelagert ist.

3. Getriebe nach Anspruch 1, dadurch gekennzeichnet, daß die Naß-Reibkupplung (29) koaxial zu dem gemeinsamen Ausgang (21) angeordnet ist.

**Revendications**

1. Un boîte de vitesses pour un véhicule automobile à traction avant à moteur transversal ayant des trains d'engrenages (15, 22; 16, 23; 17, 24; 18, 25) qui sont chacun l'un des trains d'un groupe fournissant une série de rapports de vitesses croissants, et les deux embrayages (13, 29) actionnables indépendamment et établissant des trajets d'entraînement alterntifs par l'intermédiaire des trains d'engrenages entre un arbre d'entrée commun (12) et un arbre de sortie commun (21), les trains d'engrenages des rapports de vitesses alternatifs du groupe étant respectivement entraînés par l'un et par l'autre des embrayages, caractérisée en ce qu'un embrayage à friction (13) à plateau sec embrayé par un ressort, embrayable pour établir un trajet d'entraînement à travers le train d'engrenages (15, 22; 17, 24) d'au moins un rapport de vitesse impair, est monté d'un côté du groupe de trains d'engrenages adjacent à l'arbre d'entrée commun (12) et un embrayage (29) à friction à bain d'huile embrayé par une pression de fluide, embrayable pour établir un trajet d'entraînement à travers le train d'engrenages d'au moins un rapport de vitesse pair (16, 18), est monté de l'autre côté du groupe.

2. Un boîte de vitesses selon la revendication 1, caractérisée en ce que chaque train d'engrenage est un train à deux roues, une roue de chaque train étant coaxiale avec l'arbre d'entrée commun (12) et l'autre roue étant coaxiale à l'arbre de sortie commun (21) et montée rotative sur celui-ci.

3. Une boîte de vitesses selon la revendication 1, caractérisée en ce que l'embrayage (29) à friction à bain d'huile est coaxial à l'arbre de sortie commun (21).

FIG.1.

FIG.2.

# FIG. 3.